Europäisches Patentamt

European Patent Office

Office européen des brevets

(19)

(11) Numéro de publication: **0 000 312**
**B1**

(12) **FASCICULE DE BREVET EUROPEEN**

(45) Date de publication du fascicule du brevet: **14.07.82**

(21) Numéro de dépôt: **78400042.4**

(22) Date de dépôt: **29.06.78**

(51) Int. Cl.³: **G 05 D 16/00,**
**A 62 B 17/00, A 62 B 7/14**

(54) Installation respiratoire et de protection contre l'accélération pour avions de combat.

(30) Priorité: **01.07.77 FR 7720345**

(43) Date de publication de la demande:
**10.01.79 Bulletin 79/1**

(45) Mention de la délivrance du brevet:
**14.07.82 Bulletin 82/28**

(84) Etats contractants désignés:
**DE GB SE**

(56) Documents cités:
**DE - B - 1 249 698**
**FR - A - 1 520 187**
**GB - A - 890 623**
**GB - A - 1 113 235**
**GB - A - 1 217 196**
**US - A - 3 672 384**

(73) Titulaire: **INTERTECHNIQUE (Société anonyme)**
**F-78370 Plaisir (FR)**

(72) Inventeur: **Beaussant, Raymond**
**4, Cité Pasteur**
**F-91220 Bretigny (FR)**
Inventeur: **Claude, Jacques**
**32, Avenue de la République**
**F-94260 Fresnes (FR)**

(74) Mandataire: **Fort, Jacques et al,**
**CABINET PLASSERAUD 84, rue d'Amsterdam**
**F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Installation respiratoire et de protection contre l'accélération pour avions de combat

La présente invention concerne les installations destinées à fournir le mélange respiratoire aux membres d'équipage d'avion de combat et à les protéger contre les effets de l'accélération, du type comprenant un régulateur de mélange respiratoire, un régulateur anti-g commandant la pression de gaz dans les poches d'un pantalon de protection contre les accélérations, dont l'organe de détection est constitué par une masselotte déplaçable suivant la direction d'accélération à laquelle est sensible le porteur du pantalon et établissant, dans lesdites poches, une pression fonction croissante de l'accélération, et des moyens destinés à établir dans lesdites poches une pression fonction croissante de l'altitude.

Le brevet US 3 672 384 décrit une installation de ce type, qui vise à remplir plusieurs fonctions:

— fournir aux membres de l'équipage du gaz respiratoire dont la composition et la pression s'adaptent automatiquement aux variations de l'altitude qui, sur certains avions en cours d'étude, approche de 30 000 m, ce qui implique, à défaut d'un scaphandre, l'emploi d'un casque sous pression;

— protéger ces membres d'équipage contre les effets de l'accélération par gonflage de poches prévues dans le pantalon lorsqu'une accélération élevée est détectée, en particulier en cas de ressource ou de virage serré.

Pour remplir correctement cette dernière fonction, le temps de réponse (c'est-à-dire le laps de temps qui s'écoule entre la réception de l'ordre de gonflage des poches et l'instant où la pression qui règne dans les poches s'est établie à une valeur suffisante) doit être faible: ce résultat est atteint en maintenant dans les poches une pression fonction croissante de l'altitude en l'absence d'accélération.

Pour atteindre ce résultat, l'installation décrite dans le brevet US 3 672 384 fait appel à deux régulateurs distincts de la pression dans les poches d'un pantalon de protection:

— un régulateur anti-g classique.

— un régulateur supplémentaire commandé exclusivement par lar pression respiratoire.

La pression dans les poches s'établit à la plus élevée des deux valeurs fournies par les régulateurs, qui sera celle fournie par le régulateur anti-g en cas d'accélération. Lorsque l'accélération cease, il est nécessaire que la pression ne redescende qu'à la valeur la plus élevée de celles fournies par les régulateurs. Ce résultat est obtenu grâce à une vanne navette qui relie l'entrée de commande d'une vanne de dégonflage à la plus haute des pressions de masque et de vanne anti-g.

L'installation ainsi réalisé semble relativement simple lorsqu'on se borne à considérer un schéma. Dans la réalité, elle est très complexe du fait de la multiplication des régulateurs de pression dans les poches.

La présente invention vise à fournir une installation dans laquelle les inconvénients des installations antérieures sont éliminés, au moins dans une large mesure, et l'équipement individuel du pilote est simplifié.

Dans ce but, l'invention propose une installation du type ci-dessus dans laquelle lesdits moyens fournissent une information d'altitude au régulateur anti-g qui est réalisé pour établir dans lesdites poches celle des pressions, qui correspondent l'une à l'information fournie par la masselotte et l'autre à l'information fournie par lesdits moyens, qui est la plus élevée.

Une telle installation comporte un seul régulateur de pression dans les poches. Mais ce régulateur unique reçoit une information représentative de l'un ou de l'autre de deux paramètres différents (l'altitude ou l'accélération). La sélection du paramètre s'effectue automatiquement, avantageusement à l'aide d'une vanne navette. Mais cette navette ne remplit pas la même fonction que dans le brevet U.S. Elle sélectionne .ne pression de commande du régulateur t nique parmi les pressions correspondant l'une à l'information d'altitude, l'autre à l'information d'accélération. Elle intervient pour commander le gonflage aussi bien que le dégonflage des poches. Ce type de coopération permet de réaliser une installation beaucoup plus simple que celle de l'art antérieur.

Les moyens fournissant une information d'altitude peuvent être constitués par une capsule altimétrique associée à une soupape; ils peuvent également être constitués par une prise de pression sur le régulateur d'oxygène respiratoire que comporte également l'installation.

L'invention vise de plus à fournir une installation comportant une masselote de détection des accélérations perfectionnée et pouvant être réalisée sous forme miniaturisée.

Pour cela, la masselotte est constituée par une masse suspendue par une membrane disposée perpendiculairement à l'axe des accélérations à détecter, membrane disposée dans un plan passant approximativement par le centre de gravité de la masse.

Suivant un autre aspect encore de l'invention, le régulateur commandant la pression de gaz dans les poches du pantalon est muni de moyens permettant de prégonfler, sous une pression limitée, les poches du pantalon dès que les commandes de vol sont placées dans une position qui va provoquer une accélération de l'avion. Le temps de réponse est ainsi considérablement réduit et les membres de l'équipage bénéficient d'une protection dès qu'ils subissent l'accélération, ce qui n'est pas le cas à l'heure actuelle. Cette disposition est particulièrement aisée à mettre en oeuvre dans le cas des avions qui comportent un système de

commande à transmission électrique, fréquemment dénommé "fly by wire". En effet, le signal fourni au régulateur peut être directement dérivé de la commande. Un circuit correcteur, utilisant par exemple un amplificateur, un temporisateur, éventuellement un circuit proportionnel-intégral-dérivée, peut être utilisé pour adapter la commande au type particulier d'avion concerné.

Quelle que soit la solution adoptée, on voit que le vêtement de protection peut se réduire à un pantalon anti-g, dont les poches sont également gonflables pour assurer la pressurisation nécessaire à haute altitude, et à un blouson pressurisé, sans qu'une liaison pneumatique soit nécessaire entre pantalon et blouson.

L'invention sera mieux comprise à la lecture de la description qui suit de dispositifs qui en constituent des modes particuliers de réalisation, donnés à titre d'exemples non limitatifs. La description se réfère aux dessins qui l'accompagnent, dans lesquels:

— la figure 1 est un schéma de principe de la partie anti-g de l'installation suivant l'invention;

— la figure 2 est une vue schématique en coupe de la masselotte de l'installation de la figure 1, dans la position qu'elle occupe en cas d'accélération;

— la figure 3 montre schématiquement la variation du volume V des poches de protection en fonction de la pression Δp par rapport à l'ambiance;

— les figures 4 et 5 montrent des régulateurs anti-g constituant des variantes de celui de la figure 1;

— la figure 6 est un diagramme par blocs montrant les principaux composants d'une installation;

— la figure 7 montre, de façon simplifiée, un régulateur respiratoire utilisable dans l'installation de la figure 6.

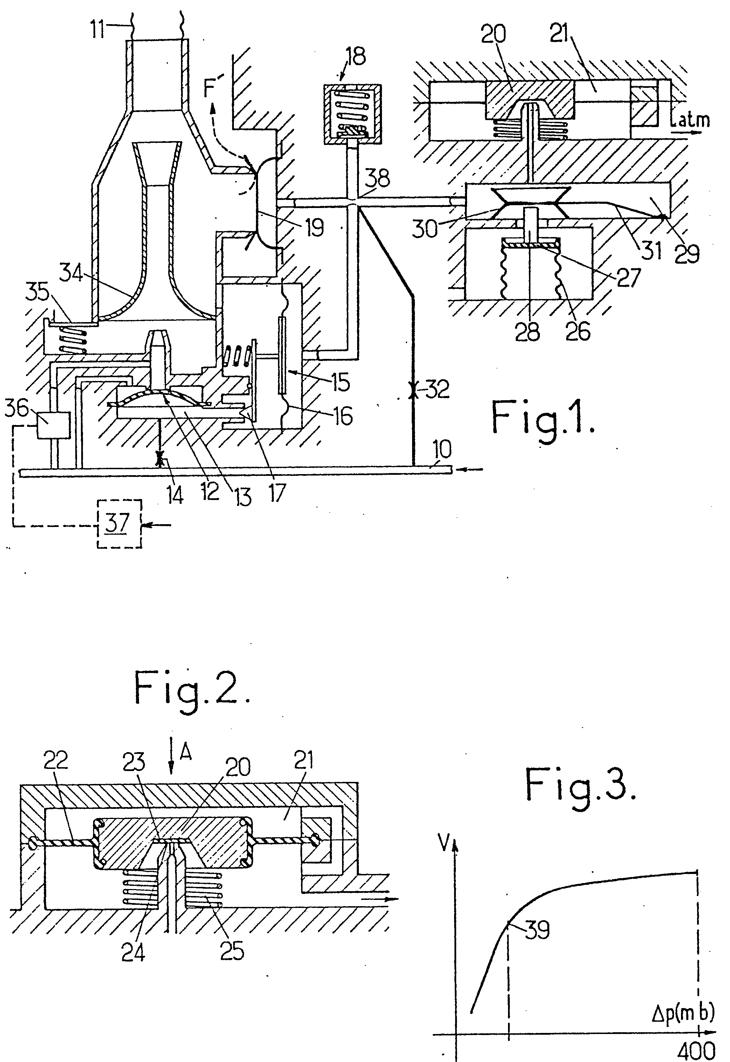

La figure 1 montre de façon extrêmement schématique et simplifiée la partie d'une installation qui est destinée à commander la pression dans les poches de pantalon du vêtement de protection contre les accélérations.

L'installation est alimentée par une conduite 10 d'amenée de gaz sous pression. Ce gaz sera par exemple de l'oxygène provenant d'un convertisseur d'oxygène liquide embarqué, ou de l'air, sous une pression de quelques bars (5 bars par exemple). Les poches du pantalon sont reliées à l'installation par une conduite souple 11.

L'installation représentée en figure 1 (où l'échelle n'est pas respectée) comporte un certain nombre d'organes qui sont classiques et ne seront en conséquence que brièvement décrits. Ces organes comprennent une soupape principale 12 constituée par un siège fixe et une membrane. En position de repos, la membrane est appliquée sur le siège et sépare les conduites 10 et 11. Lorsqu'une chambre de commande 13, délimitée par l'arrière de la membrane et le boîtier dans lequel elle est placée, est soumise à la pression régnant dans la conduite 10, la membrane est appliquée sur son siège et ferme le passage dans la siège.

La pression qui règne dans la chambre 13, reliée à la conduite 10 par un orifice calibré 14, est commandée par un clapet pilote 15. Ce clapet pilote comporte une membrane sensible de régulation 16 commandant un élément d'obturation 17 qui coopère avec un siège fixe pour mettre en communication la chambre 13 avec la conduite 11.

La pression qui règne à l'arrière de la membrane sensible 16 est à son tour déterminée par des clapets de commande et de sécurité. De façon classique, un clapet de sécurité 18, taré par exemple à 470 mbars, évite l'apparition d'une surpression excessive à l'arrière de la membrane 16. Une soupape 19 permet à l'air contenu dans les poches de s'échapper à l'atmosphère, dans la direction indiquée par la flèche F', lorsque la pression appliquée à l'arrière de la membrane 16 diminue.

Le clapet de commande en fonction de l'accélération est actionné par une masselotte perfectionnée par rapport à celles antérieurement connues.

Cette masselote (figure 2) comporte une masse 20 de quelques dizaines de grammes contenue dans une chambre 21 ménagée dans un boîtier fixe et reliée à l'atmosphère. La masse 20 est portée par une membrane 22 dont la périphérie est fixée au boîtiér. Cette membrane est disposée transversalement au sens A des accélérations à détecter. Sa partie interne est fixée à demeure sur le pourtour de la masse 20, de telle façon que, au repos, le plan de la membrane passe approximativement par le centre de gravité de la masse 20. Dans la masse 20 est ménagée, dans un plan perpendiculaire à la direction A et passant approximativement par le centre de gravité de la masse, une face 23 munie d'un joint plat et destinée à s'appliquer de façon étanche contre un siège fixe 24 qui délimite un trou calibré de faible diamètre. Au repos, un ressort de rappel 25 écarte la face d'appui du siège 24. En cas d'accélération suivant la direction A, la face 23 vient s'appliquer sur le siège 24 et ferme l'orifice calibré comme indiqué sur la figure 2. Il faut noter au passage que le boîtier limite les déplacements de la masse 20 à partir du siège 24 à une longueur qui est très légèrement supérieure à la levée nécessaire.

La membrane pourra être en silicone moulé et être fixée à la masse soit par surmoulage, soit par emboîtage. L'orifice délimité par le siège aura généralement un diamètre très faible, de 2 à 3 mm par exemple. On voit que le boîtier tout entier pourra être miniaturisé, surtout si l'on constitue le siège 24 par un saphir qui peut être percé d'un trou de très faible diamètre.

La raideur du ressort pourra être telle que la masse 20 ne s'applique sur le siège 24 qu'à partir d'une accélération de 2 g environ.

La pression qui règne derrière la membrane 16 du clapet pilote est également modifiable en fonction de l'altitude.

Dans ce but, l'installation comprend une capsule altimétrique 26 scellée, soumise à la pression qui règne dans la cabine, dont une extrémité est portée par un boîtier fixe et dont l'autre extrémité porte un élément d'obturation 27 muni d'un prolongateur 28. Lorsque la pression atmosphérique est proche de sa valeur au niveau de la mer, l'organe d'obturation 27 dégage une ouverture du boîtier. Au contraire, lorsque la pression dans la cabine descend à une valeur qui est par exemple inférieure à 200 mbars absolus, la capsule 26 se dilate et l'organe 27 tend à séparer l'intérieur du boîtier d'une chambre relais 29. Le passage dans le siège 24 ne communique avec l'arrière de la membrane 16 du clapet pilote que par l'intermédiaire de cette chambre relais. Pour éviter une interférence intempestive entre l'action de la masselotte et celle de la capsule altimétrique 26, la chambre relais 29 contient un clapet double 30 qu'une lame élastique de rappel 31 maintient au repos dans une position où il sépare la chambre relais du boîtier de la capsule et, par contre, relie la chambre relais 29 au passage dans le siège 24 (figure 1). Par contre, lorsque l'organe d'obturation 27 est appliqué sur son siège, le poussoir prolongateur 28 repousse le clapet double 30 et sépare la chambre relais 29 du passage ménagé dans le siège 24.

La surface d'action sur l'obturateur 27 de la pression qui règne dans la chambre relais 29 est choisie de façon que la pression dans cette chambre s'établisse à une valeur fonction de la pression dans la cabine, donc de l'altitude.

L'installation comporte également un orifice de fuite calibré 32 reliant la conduite 10 à la chambre relais et à l'arrière de la membrane 16.

Dans l'installation représentée, le débit gazeux admis par la soupape 12 n'est pas envoyé directement dans les poches du pantalon de protection. Ce gaz est utilisé comme fluide d'entraînement dans un éjecteur 34 alimenté en air en provenance de la cabine par l'intermédiaire d'un clapet anti-retour 35.

Cette disposition présente plusieurs avantages. Le débit primaire est considérablement plus faible que le débit à fournir au pantalon, ce qui permet de miniaturiser l'installation et notamment ses organes mobiles. On réduit de façon considérable la consommation de gaz provenant de la conduite 10, ce qui est particulièrement important dans le cas où ce gaz est constitué par de l'oxygène qui alimente également le dispositif respiratoire: le rapport des débits d'air entraîné et de gaz d'entraînement peut être de 8 à 1. Enfin, les pointes de débit sont considérablement réduites et deviennent compatibles avec les possibilités des convertisseurs d'oxygène liquide.

On a montré sur la figure 1, en tirets, des moyens permettant de prégonfler les poches du pantalon de protection avant même que la masselotte soit soumise à une accélération. Ces moyens comportent une électrovanne 36 et un circuit électrique 37 de commande. Cette disposition est particulièrement commode à mettre en oeuvre si l'avion est muni d'un système de gouverne à transmission d'ordres par voie électrique. Dans ce cas en effet, il suffit de prélever le signal électrique sur la transmission et de le traiter. Le mode de traitement utilisé dépendra d'une part, des caractéristiques aérodynamiques et de commande de l'avion, d'autre part, de paramètres de situation, tels que par exemple la vitesse, l'altitude, etc.

Dans la pratique, le circuit électrique comportera en général essentiellement un temporisateur qui, à réception d'un signal indiquant que la position de gouverne va provoquer une accélération suivant la direction A, appliquera à l'électrovanne 36 un signal d'ouverture pendant une durée prédéterminée, correspondant à l'établissement d'une pression appropriée (typiquement 3 secondes).

L'intérêt du prégonflage des poches du pantalon de protection contre les accélérations apparaît immédiatement si l'on se reporte à la figure 3, qui montre la variation du volume V de ces poches en fonction de la pression Δp par rapport à l'ambiance. Lorsqu'on admet du gaz sous pression dans les poches, à partir d'une conduite dont le débit est forcément limité, dans une première étape le volume des poches augmente. Puis, une fois les poches complètement dilatées, le volume ne change plus et la pression augmente jusqu'à atteindre la valeur qui règne dans la conduite d'alimentation.

Le pilote n'est évidemment protégé qu'à partir du moment où la pression dans les poches est proche de la valeur définitive. Or, l'établissement de cette valeur peut nécessiter un temps de l'ordre de la seconde, suffisant pour que le pilote ait subi l'action des accélérations à un point tel que ses facultés s'en ressentent temporairement. Un prégonflage amenant, avant que les accélérations ne soient subies, le point représentatif de l'état des poches en 39, sur la figure 3, permet d'écarter les insuffisances des systèmes antérieurs.

Le prégonflage peut être effectué, comme indiqué sur la figure 1, à l'aide d'un système temporisateur qui limite indirectement la pression atteinte. On peut aussi utiliser un clapet taré associé à l'électrovanne 36, fermant l'alimentation dès que la pression arrive à la valeur indiquée par le point 39, qui peut par exemple correspondre à une pression de l'ordre des deux tiers de la pression définitive.

La commande électrique sera prévue pour n'intervenir que si le braquage des gouvernes annonce une accélération supérieure au seuil normalement prévu pour les valves anti-g classiques, de l'ordre de 2 g en général.

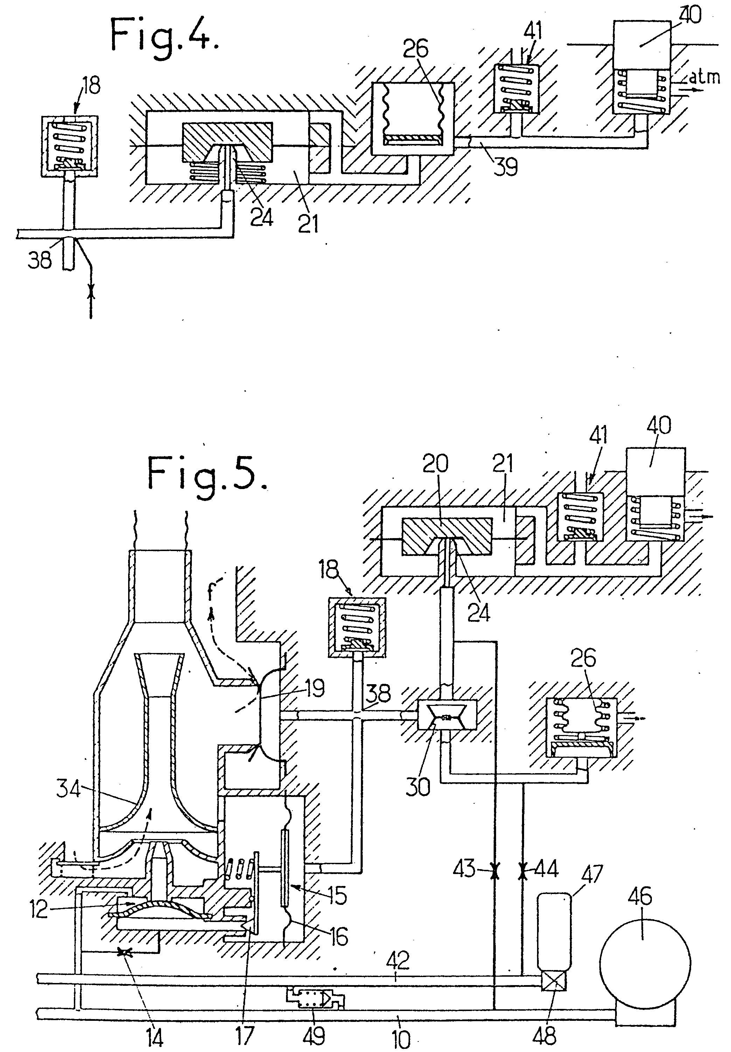

Le mode de réalisation de la figure 1 est susceptible de nombreuses variantes. A titre d'exemple, celui schématisé sur la figure 4 (où seuls ont été représentés les éléments appartenant à un circuit différent de celui de la figure 1) ne comporte pas de clapet à double effet. Le point 38, auquel se raccordent le clapet de sécurité 18, la chambre arrière du clapet pilote 15, le clapet de retour 19 et l'orifice étranglé 32, est relié directement au siège 24. Mais la chambre 21 n'est pas reliée à l'atmosphère, mais à la chambre occupée par la capsule 26. Cette dernière chambre est de son côté reliée à l'atmosphère.

Ce mode de réalisation est plus simple que celui de la figure 1. Mais, en contrepartie, les effets du régulateur à masselotte et de la capsule altimétrique se cumulent. En d'autres termes, la surpression qui sera créée à la sortie de la soupape 12 sera la somme de la surpression fonction de l'accélération provoquée par le régulateur et de la surpression provoquée par la capsule altimétrique. Cette solution reste cependant fiable dans la plupart des cas. En effet, la surpression reste limitée à la valeur de tarage du clapet de sécurité 18 (470 mbars par exemple).

On a également indiquée sur la figure 4 un montage classique de vérification avant le vol, dont peut également être équipé le dispositif de la figure 1. Ce dispositif de vérification est placé entre la sortie 39 de la chambre occupée par la capsule altimétrique 26 et l'atmosphère. Dans le cas de la figure 1, il serait placé entre la chambre 21 et l'atmosphère. Il comprend un bouton-poussoir 40 repoussé par un ressort dans une position où il laisse communiquer la sortie 39 et l'atmosphère. En pressant sur ce bouton, l'opérateur sépare la sortie 39 de l'atmosphère, la pression augmente derrière la membrane 16 du clapet pilote et les poches du pantalon de protection se gonflent jusqu'à un niveau de pression fixé par le clapet de vérification 41.

Dans la variante de réalisation montrée schématiquement en figure 5, comme dans le cas de la figure 1, il n'y a pas addition des ordres, mais prépondérance de calui qui fixe la surpression la plus élevée. Le dispositif est alimenté, d'une part, par la conduite d'alimentation normale 10 en oxygène, d'autre part, par la conduite d'alimentation de secours 42 portée par le siège éjectable. Sur la figure 5, les éléments correspondant à ceux de la figure 1 portent le même numéro de référence. On retrouve la masselotte 20 et ses systèmes annexes ainsi que la capsule altimétrique 26. Au lieu de prévoir un orifice calibré 32 alimentant le point 38, le dispositif comporte un premier orifice calibré 43 reliant la conduite d'alimentation normale 10 au passage ménagé dans le siège 24 de la masselotte et un second orifice calibré 44 reliant la conduite de secours 42 au passage de liaison entre la chambre occupée par la capsule 26 et le clapet double 30. Celui-ci n'est pas muni de ressort de rappel. Le clapet principal 12 est alimenté à partir de la conduite normale 10.

Cette disposition permet, en cas d'éjection, de réserver l'alimentation de secours, de capacité limitée, aux fonctions indispensables, comme on va le voir maintenant.

La conduite normale 10 est généralement alimentée par un convertisseur d'oxygène liquide 46 porté par l'avion. La conduite de secours 42 est munie d'une bouteille de gaz comprimé 47, munie d'un détendeur 48, portée par le siège. Un clapet anti-retour 49 permet au convertisseur 46 d'alimenter également la conduite de secours 42, sauf en cas d'éjection.

En fonctionnement normal, le convertisseur 46 alimente les poches du pantalon (fonction anti-g). Il alimente également le masque ou le casque du pilote et les poches du blouson (fonctions respiratoires et pressurisation).

En cas d'éjection à haute altitude, les poches du pantalon sont déjà gonflées; la fonction anti-g ne peut plus être remplie, le siège 24 de la masselotte 20 perdant son alimentation; le clapet 49 se ferme, isolant la conduite 42 qui continue à alimenter le compartiment de la capsule 26. Celle-ci va, au fur et à mesure de la descente en parachute, diminuer la pression dans les poches du pantalon en diminuant la pression qui règne derrière le clapet 19.

En montant plusieurs clapets doubles tels que 30 en cascade, on peut mélanger un nombre d'ordres supérieur à deux, en donnant prépondérance à celui qui est le plus fort.

On peut remplacer la capsule altimétrique 26 par une prise de pression à partir du régulateur à la demande qui fournit du gaz respiratoire au porteur du pantalon. La prise peut être faite sur l'étage haute pression du régulateur, avec réduction intermédiaire de pression. Elle peut aussi être faite sur la sortie d'utilisation. Le clapet double 30 évite dans le cas des figures 1 et 5 toute action de la masselotte 20 sur la pression du mélange respiratoire. Le régulateur est par exemple du type décrit dans le brevet FR 74 34826, publié sous le n° 2 288 346.

On a jusqu'ici décrit essentiellement la commande de la pression dans les poches du pantalon pour remplir les fonctions de protection anti-g et de pressurisation. Comme on l'a indiqué plus haut, le régulateur de mélange respiratoire de l'installation est avantageusement prévu pour coopérer avec le régulateur anti-g à la protection contre les accélérations.

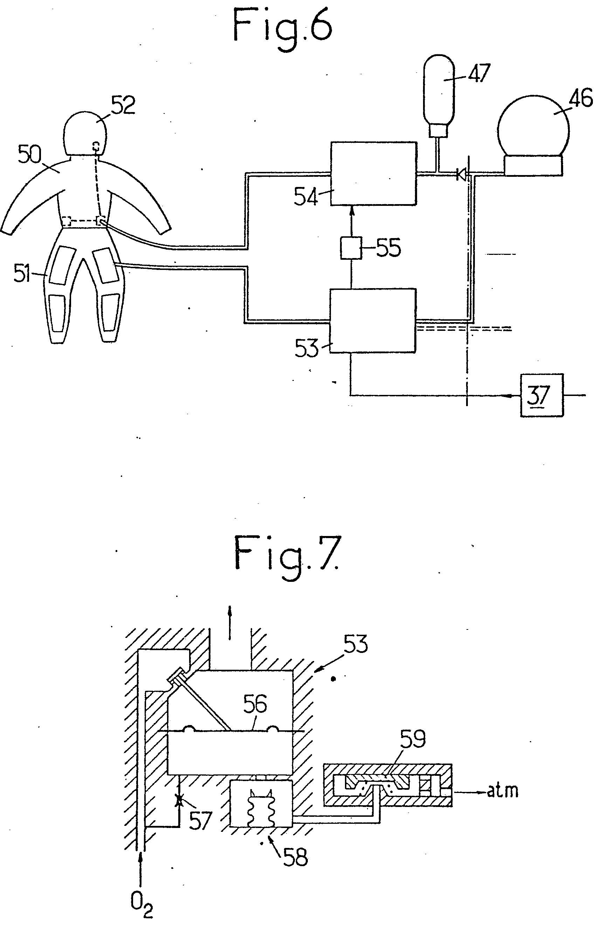

Pour mieux faire apparaître cette coopération, on a représenté sur la figure 6 un diagramme par blocs d'un exemple de réalisation. La figure 6 montre le blouson 50 et le pantalon 51 qui constituent le vêtement de protection du pilote, muni par ailleurs d'un casque de pressurisation 52. Le régulateur anti-g 53, par exemple du type illustré en figure 5, est alimenté par le convertisseur 46 ou par une autre source, telle que le compresseur d'un turboréacteur (comme représenté en tirets). Le régulateur de mélange respiratoire 54 est alimenté normalement par le convertisseur 46 et en secours par la bouteille 47. Il alimente le blouson 50 et le casque 52. Sur la figure, un trait mixte sépare les organes portés par le siège de ceux portés par la structure de l'avion, pour plus de clarté.

Le régulateur respiratoire 54 est avantageusement prévu pour créer une surpression en cas d'accélération. Pour cela, on peut soit ajouter au régulateur 54 une masselotte, soit lui faire parvenir un signal provenant du régulateur 53. Dans la second cas, il suffira de prélever la pression entre le siège 24 et le clapet double 30 (figure 1) ou bien à la sortie du régulateur 54 et de l'amener au régulateur 53 par l'intermédiaire d'un diviseur de pression 55, comme schématisé sur la figure 6. Dans le premier cas, on peut adopter la disposition schématisée sur la figure 7. Le compartiment situé en arrière de la membrane de demande 56 est relié de façon classique par une fuite calibrée 57 à l'alimentation en oxygène et, par un passage commandé par une capsule altimétrique 58, à l'atmosphère de la cabine. Mais, sur le trajet entre la capsule et l'atmosphère, est interposée une masselotte 59, prévue pour donner une surpression en fonction de l'accélération nettement moins croissante que celle commandée par la masselotte 20. Du fait que les surpressions commandées par la masselotte 59 resteront toujours faibles, il y a peu d'inconvénient à additionner les ordres de la masselotte et de la capsule. Cependant, un montage à mélange des ordres par clapet double comparable à celui des figures 1 et 5 est possible.

La mise du mélange respiratoire sous une surpression qui augmente en fonction de l'accélération évite l'écrasement des alvéoles pulmonaires. Une surpression de 5 à 10 mbars/g est suffisante. On voit donc qu'elle est beaucoup plus faible que la pression $\Delta p$ de gonflage des poches.

Quel que soit le mode de réalisation utilisé, on voit qu'il est possible de simplifier de façon importante le vêtement de protection: en effet, un seul et même jeu de poches de pantalon permet d'assurer la protection contre les effets de l'accélération et contre la dépression en altitude, y compris en cas de bris de verrière ou d'éjection.

## Revendications

1. Installation destinée à fournir le mélange respiratoire aux membres d'équipage d'avion de combat et à les protéger contre les effets de l'accélération, comprenant un régulateur de mélange respiratoire, un régulateur anti-g commandant la pression de gaz dans les poches d'un pantalon de protection contre les accélérations, dont l'organe de détection est constitué par une masselotte déplaçable suivant la direction d'accélération à laquelle est sensible le porteur du pantalon et établissant, dans lesdites poches, une pression fonction croissante de l'accélération et des moyens destinés à établir dans lesdites poches une pression fonction croissante de l'altitude, caractérisée en ce que lesdits moyens fournissent une information d'altitude au régulateur anti-g qui est réalisé pour établir dans lesdites poches de pantalon (51) celle des pressions qui correspondent l'une à l'information fournie par la masselotte (20) et l'autre à l'information fournie par lesdits moyens (26) qui est la plus élevée.

2. Installation suivant la revendication 1, caractérisée en ce que les moyens destinés à fournir au régulateur anti-g une information d'altitude sont constitués par une capsule altimétrique (26) associée à une soupape (27) ou par une prise de pression sur le régulateur de mélange respiratoire.

3. Installation suivant la revendication 1 ou 2, caractérisée en ce que la masselotte (20) est constituée par une masse suspendue par une membrane (22) placée perpendiculairement à l'axe des accélérations à détecter et dans un plan passant approximativement par le centre de gravité de la masse qui comporte une surface située perpendiculairement à la direction des accélérations à détecter, passant par le centre de gravité de la masse et destinée à s'appliquer contre un siège fixe (24) sous l'action desdites accélérations, contre l'effort de moyens élastiques de rappel (25).

4. Installation suivant l'une quelconque des revendications précédentes, alimentée par de l'oxygène sous pression, caractérisée en ce que ledit régulateur anti-g comporte un éjecteur à venturi (34) de dilution du débit d'oxygène par de l'air en provenance de la cabine.

5. Installation suivant l'une quelconque des revendications précédentes, caractérisée en ce qu'elle comporte un régulateur de mélange respiratoire muni d'un système (55 ou 59) mettant ce mélange en surpression en réponse à une accélération.

6. Installation suivant la revendication 5, caractérisée en ce que la surpression est commandée soit par une masselotte additionnelle (59) prévue pour provoquer, à accélération égale, une surpression inférieure à celle commandée par la masselotte du régulateur anti-g, soit par un ordre provenant du régulateur anti-g avec interposition d'un diviseur de pression (55).

7. Installation suivant l'une quelconque des revendications précédentes, caractérisée en ce qu'elle comporte au moins un clapet à double effet (30) de mélange d'ordres provenant d'organes de régulation différents, tels que l'organe (20) de détection des accélérations et l'élément (26, 27) sensible à l'altitude, pour déterminer la pression dans les poches du pantalon de protection (51) en réponse à celui des ordres qui correspond à la pression la plus élevée.

8. Installation suivant la revendication 1, 2 our 3, caractérisée en ce que le régulateur anti-g comprend une soupape principale (12) interposée entre une alimentation en gaz sous pression et lesdites poches, dont l'organe mobile est constitué par une membrane soumise à une pression réglée par un clapet pilote (15) commandé par la pression qui règne dans une chambre alimentée par une prise de pression à partir du régulateur de mélange respiratoire et par la sortie d'un clapet commandé par la masselotte et contenant un clapet à double effet automatique (30) qui sépare la chambre de l'alimentation à la pression la moins élevée.

9. Installation suivant l'une quelconque des revendications précédentes, caractérisée en ce que ledit régulateur anti-g comporte, en plus de l'organe de détection constitué par une masselotte (20), des moyens (36, 37) permettant de prégonfler, sous une pression limitée, les poches du pantalon à partir d'un ordre électrique provenant des commandes de vol lorsque celles-ci sont placées dans une position qui provoquera une accélération.

10. Installation suivant l'une quelconque des revendications précédentes, comprenant une source d'alimentation normale en oxygène, telle qu'un convertisseur d'oxygène liquide (46), et une source de secours (47), liée au siège éjectable du membre d'équipage, caractérisée par des moyens (49) pour interdire la commande de l'alimentation des poches du pantalon par la masselotte du régulateur anti-g en cas d'éjection.

## Claims

1. Apparatus for delivering the breathing mixture to the members of the crew of a fighter aircraft and for protecting said crew members against the effects of acceleration, comprising a respiratory mixture regulator, an anti-g regulator controlling the gas pressure in the pockets of an acceleration protection cruiser, wherein the detection element of the anti-g regulator consists in an inertia body movable along the acceleration direction along which the trousers wearer is sensitive, and establish in said pockets a pressure which is an increasing function of the acceleration, and means for establishing in said pockets a pressure which is an increasing function of the altitude, characterized in that said means deliver an altitude information to said anti-g regulator which is constructed for setting a pressure in said pockets which is the higher one of the pressures which correspond to the information delivered by the inertia weight (20) and to the information delivered by said means (26) respectively.

2. Apparatus according to claim 1, characterized in that the means for delivering an altitude information to the anti-g regulator consists of an altimetric capsule (26) associated with a valve (27) or of a pressure pick-up on the respiratory mixture regulator.

3. Apparatus according to claim 1 or 2, characterized in that the inertia weight (20) consists of a mass suspended by a diaphragm (22) placed perpendicular to the axis of the accelerations to be detected and in a plane passing approximately through the center of gravity of the mass which is formed with a surface perpendicular to the direction of the acceleration to be detected, passing through the center of gravity of the mass and arranged for cooperation with the fixed seat (24) under the action of said accelerations, against the force of resilient return means (25).

4. Apparatus according to any one of the preceding claims, fed with pressurized oxygen, characterised in that said anti-g regulator comprises a venturi ejector nozzle (34) for diluting the oxygen flow with air coming from the cabin.

5. Apparatus according to any one of the preceding claims, characterized in that it comprises a breathing mixture regulator provided with a system (55 or 59) for causing the mixture to be over-pressurized in response to an acceleration.

6. Apparatus according to claim 5, characterized in that the other pressure is controlled either by an additional inertia body (59) arranged, for the same amount of acceleration, to cause an over-pressure less than that controlled by the inertia body of the anti-g régulator, or by an order coming from the anti-g regulator through a pressure divider (55).

7. Apparatus according to any one of the preceding claims, characterized in that it comprises at least one double action valve (30) for mixing orders coming from different regulation elements, such as the element (20) for detecting accelerations and the element (26, 27) responsive to the altitude, for setting the pressure in the pockets of the protective trousers (51) in response to that order which corresponds to the higher pressure.

8. Apparatus according to claims 1, 2 or 3, characterized in that the anti-g regulator comprises a main valve (12) located between a pressurized gas supply and said pockets, whose movable element consists of a diaphragm subjected to a pressure metered by a pilot valve (15) controlled by the pressure which prevails in a chamber supplied through a pressure pick-up from the breathing mixture regula or and from the outlet of a valve controlled by the inertia body and comprising and automatic double action valve (30) which separates the chamber from the supply at the lower pressure.

9. Apparatus according to any one of the preceding claims, characterized in that said anti-g regulator comprises, in addition to the detection element consisting of an inertia body (20), means (36, 37) for pre-inflating under a limited pressure the pockets of the trousers responsive to an electrical order from the flight controls when the latter are placed in a position which will cause an acceleration.

10. Apparatus according to any one of the preceding claims, comprising a source of oxygen for normal supply, such as a liquid oxygen converter (46) and an emergency source (47) fast with the ejection seat of the crew member, characterized by means (49) for inhibiting control of the supply of the trousers pockets by the inertia body of the anti-g regulator after bailing out.

**Patentansprüche**

1. Einrichtung zur Bereitstellung einer Atemmischung für die Besatzungsmitglieder eines Kampfflugzeuges und deren Schutz gegen Beschleunigungseffekte mit einem Regler der Atemmischung, einem Anti-g-Regler, der den Druck des Gases in den Taschen der Schutzhosen gegen die Beschleunigungen betätigt, dessen Wahrnehmungsorgan aus einem Reguliergewicht besteht, das entsprechend der Richtung der Beschleunigung verlagerbar ist, welcher der Träger der Hose unterworfen ist, und das in den Hosentaschen einen Druck aufbaut, abhängig von der Zunahme der Beschleunigung, und Mitteln zur Erzeugung eines Druckes in diesen Taschen, abhängig von der Zunahme an Höhe, dadurch gekennzeichnet, daß die genannten Mittel dem Anti-g-Regler eine Höheninformation liefern, der derart gestaltet ist, um in den Hosentaschen (51) denjenigen der Drücke, der der höhere ist, zu erzeugen, wobei der eine der Informationen entspricht, die von dem Reguliergewicht (20) geliefert wird und der andere der Information entspricht, die von den Mitteln (26) geliefert wird.

2. Einrichtung nach Anspruch 1, dadurch gekennzeichnet, daß diejenigen Mittel, die zur Lieferung von Höheninformationen zum Anti-g-Regler bestimmt sind, von einer Höhenkapsel (26), die mit einer Ventilkammer (27) verbunden ist, oder durch einen Druckanschluß auf dem Regler der Atmungsmischung gebildet sind.

3. Einrichtung nach Anspruch 1 oder 2, dadurch gekennzeichnet, daß das Reguliergewicht (20) von einer Masse gebildet wird, welche mit einer Membran (22) aufgehängt ist, die senkrecht zu der Achse der zu erfassenden Beschleunigungen und in einer Ebene angeordnet ist, die näherungsweise durch den Schwerpunkt der Masse angeordnet ist, welche eine Oberfläche aufweist, die senkrecht zur Richtung der zu erfassenden Beschleunigung steht und durch das Schwerezentrum der Masse führt und bestimmt ist, um sich an einen festen Sitz (24) unter der Einwirkung der Beschleunigung gegen die Kraft von elastischen Rückstellmitteln (25) anzulegen.

4. Einrichtung nach einem der vorangehenden Ansprüche, gespeist mit unter Druck stehendem Sauerstoff, dadurch gekennzeichnet, daß der Anti-g-Regler eine Venturi-Düse (34) zur Verdünnung des Anteiles an Sauerstoff durch die Luft aus der Kabine aufweist.

5. Einrichtung nach einem der vorangehenden Ansprüche, dadurch gekennzeichnet, daß sie einen Regler der Atmungsmischung, der mit einem System (55 oder 59), welches diese Mischung in Reaktion auf eine Beschleunigung auf Überdruck bringt, ausgestattet ist, aufweist.

6. Einrichtung nach Anspruch 5, dadurch gekennzeichnet, daß der Überdruck entweder durch ein zusatzliches Reguliergewicht (59), welches vorgesehen ist, um bei gleichgültig welcher Beschleunigung einen Überdruck zu bewirken, welcher niedriger ist, als derjenige, welcher das Reguliergewicht des Anti-g-Reglers steuert, oder durch einen Befehl, der vom Anti-g-Regler unter Zwischenschaltung eines Druckteilers (55) herrührt, gesteuert wird.

7. Einrichtung nach einem der vorangehenden Ansprüche, dadurch gekennzeichnet, daß sie wenigstens eine doppelt wirkende Klappe (30) zur Mischung der Befehle, die von den unterschiedlichen Regulierungsorganen stammen, wie das Organ (20) zur Wahrnehmung der Beschleunigungen und das höhenempfindliche Element (26, 27) aufweist, um den Druck in den Taschen der Schutzhose (51) in Entgegnung auf diejenigen Befehle, die dem höheren Druck entsprechen, zu bestimmen.

8. Einrichtung nach einem der Ansprüche 1, 2 oder 3, dadurch gekennzeichnet, daß der Anti-g-Regler ein Hauptventil (12), welches zwischen einer Zuführung von unter Druck stehendem Gas und den Taschen zwischengeschaltet ist, aufweist, dessen bewegliches Organ von einer Membran gebildet ist, die einem Druck unterworfen ist, welcher durch eine Steuerklappe (15) reguliert wird, die von dem Druck gesteuert wird, welcher in einer Kammer herrscht, die durch einen Druckanschluß vom Regler der Atmungsmischung an und durch den Ausgang einer Klappe gespeist wird, die durch das Reguliergewicht gesteuert wird und eine automatische doppelt wirkende Klappe (30) enthält, welche die Speisekammer von dem weniger hohen Druck trennt.

9. Einrichtung nach einem der vorangehenden Ansprüche, dadurch gekennzeichnet, daß der Anti-g-Regler noch ein Wahrnehmungsorgan aufweist, welches gebildet ist von einem Reguliergewicht (20), von Mitteln (36, 37), die es unter einem begrenzten Druck erlauben, die Hosentaschen aufgrund eines elektrischen Befehles voraufzublasen, der von Flugkommandos herrührt, wenn diese in eine Position gebracht werden, die eine Beschleunigung bewirken.

10. Einrichtung nach einem der vorangehenden Ansprüche mit einer Versorgungsquelle normalerweise von Sauerstoff, so wie ein Umwandler für flüssigen Sauerstoff (46), und mit einer Hilfsquelle (47), die mit dem Schleudersitz der Besatzungsmitglieder verbunden ist, gekennzeichnet durch Mittel (49) zur Untersagung der Zuführsteuerung der Hosentaschen durch das Reguliergewicht des Anti-g-Reglers im Falle des Ausschusses.

**0 000 312**

Fig.1.

Fig.2.

Fig.3.

Fig.4.

0.000 312

Fig.5.

2

# Fig.6

# Fig.7